# EUROPÄISCHE PATENTANMELDUNG

(11) **EP 1 143 180 A2**
(43) Veröffentlichungstag der Anmeldung: **10.10.2001**
(21) Anmeldenummer: 01201083.1
(22) Anmeldetag: 23.03.2001
(51) Int. Cl.: F16K 47/02

(54) **Heizkörperventil**

(30) Priorität: 03.04.2000 DE 10016258
(71) Anmelder: Danfoss A/S, 6430 Nordborg (DK)
(72) Erfinder: Bjerggaard, Niels, 8300 Hadsten (DK); Messmer, James David, 8000 Aarhus (DK)

(57) **Abstract**

The invention concerns radiator valve, with a valve element and a valve seat (8), on which the valve element in the closed state bears within a closing line (22).

In such radiator valves a simple way of avoiding noises is endeavoured.

For this purpose, the radial distance between the closing line (22) and a radial outer edge (24) of an overflow surface (24), which is overflown by fluid in the open state of the valve (1), varies in the circumferential direction.

## Beschreibung

The invention concerns a valve, particularly a radiator valve, with a valve element and a valve seat, on which the valve element in the closed state bears within a closing line.

A radiator valve of this kind is known from DE 196 47 028 A1. The valve seat is inserted in a valve housing. An axial guide is connected with the valve seat via supports, and guides the valve element. Such radiator valves are relatively easily manufactured. They also have a relatively large passage cross section and can therefore be used in old heating systems too.

From time to time, problems with noises occur in such valves. The result can be noises of very different kinds. They cover an area from a sharp hissing to unpleasant whistling tones.

The invention is based on the task of finding a simple way of reducing noises.

With a radiator valve as mentioned in the introduction, this task is solved in that the radial distance between the closing line and a radial outer edge of an overflow surface, which is overflown by fluid in the open state, varies in the circumferential direction.

With such an embodiment, noises are efficiently suppressed. The effect mechanism is not known exactly. However, it is assumed that the embodiment of the overflow surface with different overflow lengths prevents an influence of the valve seat or other valve parts at a certain frequency. Under certain circumstances, such frequencies can even be amplified by units connected with the valve, for example the radiator. Varying the overflow length now causes that the frequencies produced by the overflowing water also varies. It is assumed that this reduces the energy level of the individual frequencies, so that tones can practically not be heard any more. The closing line is thus the limit, within which the valve element bears on the valve seat. During operation, the narrowest passing spot usually occurs in the area of the closing line, that is, a kind of throttle, in connection with which the risk of oscillations is particularly high. The appearance of such oscillations may not be prevented by means of the new embodiment of the valve seat. However, these oscillations are prevented from being amplified or getting resonant.

Preferably, the closing line is made to be circular, and the outer edge has the shape of a polygon. This embodiment has several advantages. Firstly, it is relatively easily produced. Secondly, it is easily ensured that the overflow length, that is, the distance between the closing line and the outer edge, changes continuously. It is correct that at each polygon edge equal overflow lengths always occur in pairs, that is, on either side. Apparently, however, this is not critical, when the distance between the closing line and the outer edge changes currently.

Preferably, the polygon has a regular shape. This simplifies the production. Additionally, a certain orientation must not be observed, when fitting the valve seat into the valve.

Advantageously, the polygon has a number of edges, which lies in the range from three to nine. The smaller the number of edges is, the more seldom do equal overflow lengths, that is distances between closing line and outer edge, occur. On the other hand, however, a too small number of edges will cause a reduction of the free flow cross section through the valve seat:.

Preferably, the outer edge forms a step of a housing, whose outside has a shape that differs from the outer edge. It has turned out that in fact it is sufficient merely to provide the overflow surface of the valve seat with variable overflow lengths. It is not necessary to give the whole body of the valve seat this embodiment.

In this connection it is particularly advantageous that the cross section of the outside has the shape of a circle. Thus, it is considered that most pipes and pipe adapters used in connection with radiators also have a circular cross section. The valve seat can the relatively easily be inserted in the usual way.

Preferably, the step has a height in the range from 0.2 to 2 mm. Preferred is a minimum height in the range from 0.3 to 0.5 mm. Surprisingly, even such small steps are sufficient to provide an effective noise insulation.

In the following, the invention is described on the basis of a preferred embodiment in connection with the drawings, showing:

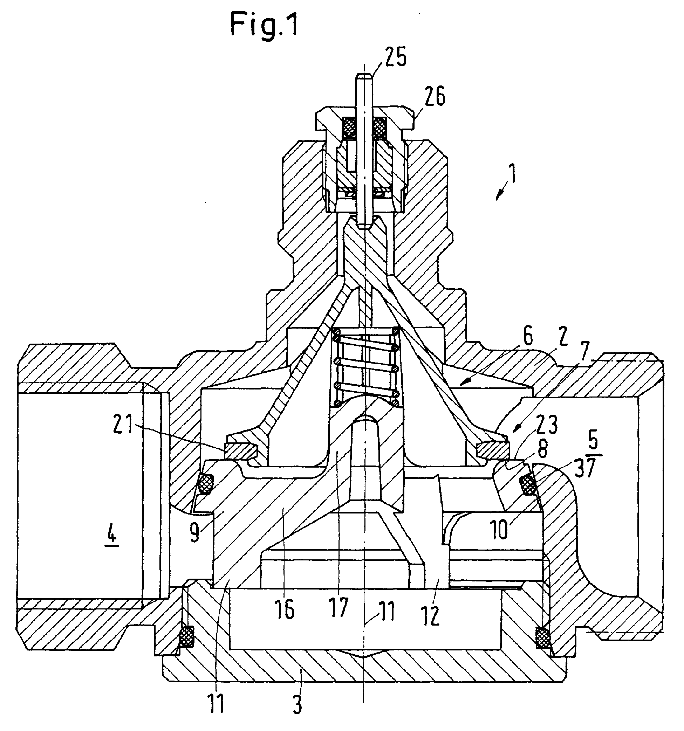

- Fig. 1: a longitudinal section of a radiator valve
- Fig. 2: a perspective view of a valve seat
- Fig. 3: a top view of the valve seat

A radiator valve 1 has a housing, which is formed by a housing body 2 and a housing cover 3. In the housing body 2 an inlet connection 4 and an outlet connection 5 are provided. The flow path between the inlet connection 4 and the outlet connection 5 can be interrupted in a sealing zone 7, which is formed by a valve element 6 and a valve seat 8.

The valve seat 8 is arranged on an insert part 9 formed separately from the housing body 2 and the housing cover. The insert part 9 is fixed between the housing body 2 and the housing cover 3. For this purpose, a circumferential wall 10 is provided in the housing body 2, which wall 10 is inclined in relation to a central axis 11. The wall 10 thus forms a longitudinal section of a conical surface. The insert part 9 bears on this wall 10 by way of a sealing ring 37.

The insert part 9 has several, in the present case three, feet 12, with which it stands on the housing cover 3. Between the feet 12, sufficient space is available to allow the water to penetrate into the inside of the insert part 9 without significant resistance. Further, the insert part 9 is provided with retaining arms 16, which could also be called "bridge". These retaining arms 16 project radially inwards, and in the present case they are made as extensions of the feet 12. In the centre, the retaining arms 16 support a guiding pin 17, which thus projects through the valve seat 8. The retaining arms 16 are arranged in a star-shape, so that a sufficiently large passage opening remains for the water. The guiding pin 17 extends over a predetermined length in the direction of the axis 11. The closing element 6 is guided on the guiding pin 17. The closing element 6 is prestressed in the opening direction by a spring 34. A tappet 25 is acting in the closing direction, the tappet being guided through a stuffing box 26 and being operable by means of an operating element, not shown in detail, for example a thermostat element.

The valve element 6 has a sealing ring 21, which bears on the valve seat 8 in the closed state. The sealing ring 21 has a certain flexibility, so that with a certain probability an extensive bearing on the valve seat 8 will occur. To simplify the following explanation, it is, however, assumed that there is a line-shaped contact between the sealing ring 21 and the insert part 9 on the valve seat 8. This line is called "closing line" 22. When, in fact, an extensive bearing of the sealing ring 21 on the valve seat 8 occurs, the closing line 22 forms the radial outer edge of this contact surface between sealing ring 21 and valve seat 8.

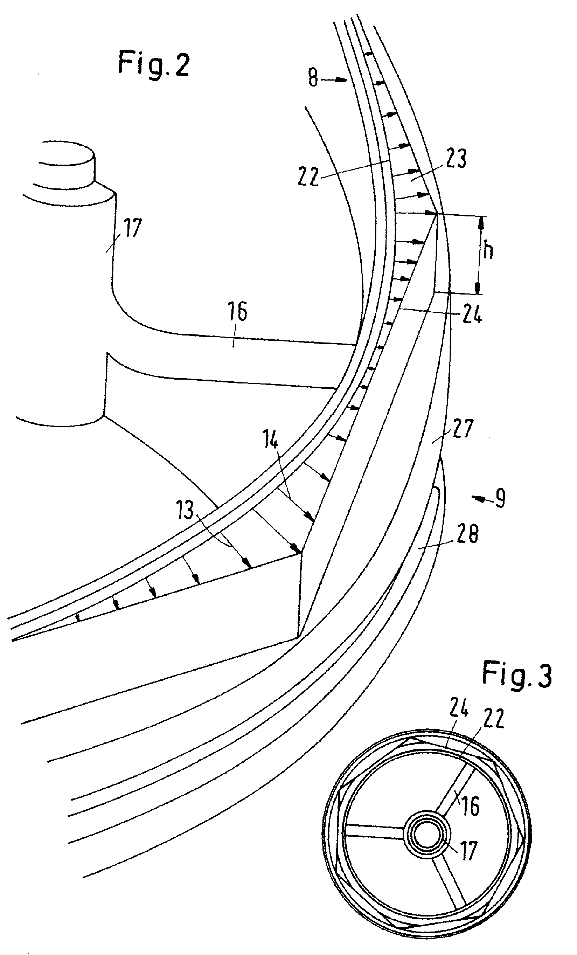

Fig. 2 shows an enlarged perspective view of the insert part 9. The closing line 22 appears on an overflow surface 23, that is, a surface, which is overflown by water, when the valve 1 is opened, that is, the valve element 6 lifts off from the valve element 8.

As can be seen clearly from Fig. 2, the radial extension of this overflow surface 23 varies, that is, the distance of the closing line 22 from an outer edge 24 of the overflow surface. In practice, this is realised in that the closing line corresponds to a circle, whereas the outer edge 24 has the shape of a polygon.

As can be seen from Fig. 3, a polygon of a regular shape is concerned, which has in the present case seven corners.

The outer edge 24 of this polygon is made as a step on the insert part 9. This step has a height h, which lies in the range from 0.2 to 1.2 mm. In Fig. 2, however, it is shown with an excessive size to facilitate the understanding.

Further, the insert part 9 has an outside 27, whose cross section is circular. In this outside 27 a groove 28 is arranged, which serves the purpose of adopting the sealing 37. In this connection, the outside 27 can be slightly inclined in the direction of the overflow surface 23. However, it can also be purely cylinder-shaped.

The different overflow lengths via the overflow surface 23 are shown by means of arrows. From this it can be seen that per corner, the same length always occurs twice, which is for example shown by means of the arrows 13, 14. These two equal lengths are arranged symmetrically around the corner in question. However, this is relatively uncritical, if it is ensured that otherwise the overflow length, that is, the distance of the closing line 22 from the outer edge 24, varies as much as possible.

The shown polygon shape of the outer edge 24 is not absolutely required. Theoretically, any other shape of the outer edge 24 would be possible, as long as it is ensured that the distance between the closing line 22 and the outer edge 24 varies continuously or permanently, to prevent an oscillation. However, the polygon shape has advantages when production is concerned.

## Claims

1. Valve, particularly a radiator valve, with a valve element and a valve seat, on which the valve element in the closed state bears within a closing line, **characterised in that** the radial distance (13, 14) between the closing line (22) and a radial outer edge (24) of an overflow surface (24), which is overflown by fluid in the open state of the valve (1), varies in the circumferential direction.

2. Valve according to claim 1, **characterised in that** the closing line (22) is made to be circular, and the outer edge (24) has the shape of a polygon.

3. Valve according to claim 2, **characterised in that** the polygon has a regular shape.

4. Valve according to claim 1 or 3, **characterised in that** the polygon has a number of edges, which lies in the range from three to nine.

5. Valve according to one of the claims 1 to 4, **characterised in that** the outer edge (24) forms a step of a housing (9), whose outside has a shape that differs from the outer edge (24).

6. Valve according to claim 5, **characterised in that** the cross section of the outside (27) has the shape of a circle.

7. Valve according to claim 5, **characterised in that** the step has a height h in the range from 0.2 to 2 mm.
